# EUROPÄISCHE PATENTSCHRIFT

(11) **EP 1 157 580 B1**
(45) Veröffentlichungstag und Bekanntmachung des Hinweises auf die Patenterteilung: **28.01.2009**
(21) Anmeldenummer: 00916781.8
(22) Anmeldetag: 01.03.2000
(51) Int. Cl.: H04W 68/00

(54) **ZELLULARES KOMMUNIKATIONSNETZ MIT SUCHFUNKTION**
CELLULAR COMMUNICATION NETWORK WITH SEARCH FUNCTION
RESEAU DE COMMUNICATION CELLULAIRE A FONCTION DE RECHERCHE

(30) Priorität: 03.03.1999 DE 19909314
(43) Veröffentlichungstag der Anmeldung: 28.11.2001
(73) Patentinhaber: SIEMENS AKTIENGESELLSCHAFT, 80333 München (DE)
(72) Erfinder: STEIN, Karl-Ulrich, D-82008 Unterhaching (DE)
(86) Internationale Anmeldenummer: PCT/DE2000/000602
(87) Internationale Veröffentlichungsnummer: WO 2000/052945

(56) Entgegenhaltungen:
- WO-A-96/26614
- WO-A-97/38548
- US-A- 5 485 163
- US-A- 5 563 931

## Beschreibung

Die Erfindung betrifft ein zellulares Kommunikationsnetz mit einer Suchfunktion.

Mobilfunksysteme, die für eine größere Teilnehmerzahl gedacht sind, sind typischerweise zellular aufgebaut, d. h. die gesamte von einem Netz zu versorgende Fläche ist in kleinere Funkzonen, sogenannte Kommunikationszellen unterteilt. Je kleiner die einzelnen Zellen sind, desto mehr Mobilfunkteilnehmer können bei begrenztem Frequenzspektrum pro Fläche versorgt werden. Die heutigen hochfrequenten digitalen Kommunikationsnetze wie GSM 900 und GSM 1800 mit sehr hohen Teilnehmerzahlen weisen geringe Zellengrößen mit Radien von einem Kilometer oder weniger auf. Auch bei einem zukünftigen Mobilfunkstandard UMTS ist die Verwendung kleiner Zellengrößen absehbar. Es ist daher durch Zuordnung eines Mobiltelefons zu einer Kommunikationszelle möglich, das Mobiltelefon mit einer Genauigkeit von einigen hundert Metern zu lokalisieren.

Das Dokument WO 9626614 offenbart einen Apparat zum Lokalisieren von Personen, der auf einem zellularen Kommunikationssystem basiert und desen Tranceiver nicht viele Komponenten wie Mikrophone und Keypad eines Mobiltelefons benötigt.

Das Dokument US 5485163 offenbart ein zellulares Kommunikationssystem mit Basisstationen und ein portables Lokalisierungsgerät zum Empfangen eines für dieses Gerät spezifischen, externen Signals.

Das Dokument US 5563931 offenbart ein zellulares Kommunikationssystem mit Basisstationen und ein Notfall-Funktelefon, das flexibel und interaktiv zwischenzwei Funkbändern schaltet, sowie eine Zentrale zum Einleiten eines Suchvorgangs durch einen autorisierten Benutzer.

Das Dokument WO 9738548 offenbart ein zellulares Kommunikationssystem und eine Positionsbestimmung via Triangulation durch Suchsignale.

Der Erfindung liegt die Aufgabe zugrunde, ein Ortungsverfahren für Mobiltelefone zur Anwendung in Notfällen wie etwa Unfällen oder zur Verbrechensbekämpfung vorzuschlagen, wobei die Ortung ohne Mithilfe des Mobilfunkbenutzers möglich sein soll.

Die Aufgabe wird gelöst durch ein zellulares Kommunikationssystem mit mehreren Kommunikationszellen, umfassend jeweils wenigstens eine Basisstation zur schnurlosen Kommunikation mit einer Vielzahl von Mobilfunkteilnehmern, und ein Heimregister zur Registrierung der Mobilfunkteilnehmer, wobei wenigstens einer der Mobilfunkteilnehmer derart ausgebildet ist, dass ein für diesen Mobilfunkteilnehmer spezifisches Suchsignal erfasst und daraufhin ein Antwortsignal ausgesendet wird. Das Heimregister weist einen Speicher zur Speicherung von suchbaren Mobilfunkteilnehmern auf. Die Basisstationen sind dazu ausgebildet, um in einem Suchvorgang mobilfunkteilnehmer-spezifische Suchsignale für Mobilteilnehmer auszusenden. Das Heimregister weist eine Steuereinrichtung auf, die dazu ausgebildet ist, auf Veranlassung durch einen autorisierten Benutzer mindestens einen Suchvorgang einzuleiten und aufgrund von durch die Basisstationen empfangenen Antwortsignalen von dem gesuchten Mobilfunkteilnehmer dessen Position und/oder Status zu ermitteln. Wenigstens ein Mobilfunkteilnehmer ist als Mobiltelefon ausgebildet, welches in einen Betriebszustand - Passivmodus - umschaltbar ist, welcher nur den Suchvorgang und sonst keine ständige Interaktion zwischen Mobiltelefon und Kommunikationssystem erlaubt. Das Mobiltelefon ist in dem Passivmodus derart ausgebildet, dass es nicht als gewöhnlich im Gesprächsmodus funktionierende Mobilfunkteilnehmer erkennbar ist und ausschließlich auf das für diesen Mobilfunkteilnehmer spezifische Suchsignal durch Aussenden des Antwortsignals anspricht. Sobald ein Mobiltelefon in den Passivmodus geschaltet wird, wird dies im Speicher des Heimregisters zusammen mit dessen Kommunikationszelle abgespeichert wird. Das Mobiltelefon schaltet sich bei Empfang des Suchsignals in den regulären Betrieb ein.

Das zu suchende Mobiltelefon ist in einen Passivmodus umschaltbar, in dem dieses nicht als gewöhnlicher Netzteilnehmer erkennbar ist und ausschließlich ein für dieses Mobiltelefon spezifisches Suchsignal empfängt und als Antwort darauf ein Antwortsignal aussendet, welches von einer oder mehreren Basisstationen empfangen wird. Aufgrund der räumlichen Verteilung der Basisstationen, die das Antwortsignal empfangen, kann der Bereich, in dem sich das Mobiltelefon befindet, ermittelt werden.

Das erfindungsgemäße Kommunikationssystem hat den Vorteil, daß es eine verdeckte Suche nach Personen mit einem günstigen Kosten/Nutzen-Verhältnis erlaubt. Die Suchfunktion kann einfach mittels Software in bestehende oder zukünftige Mobilfunksysteme wie GSM-Netze bzw. UMTS-Netze integriert werden und als Zusatzdienst einem breiten Publikum angeboten werden.

Die Erfindung schlägt ebenfalls ein Verfahren zur Positionsbestimmung eines Mobiltelefons in einem zellularen Kommunikationssystem sowie ein Mobiltelefon zur Ausführung der Suchfunktion vor. Vorteilhafte Weiterbildungen der Erfindung sind in den Unteransprüchen beschrieben.

Das Mobiltelefon ist durch einen Benutzer vorzugsweise mittels eines Identifikationscodes (PIN) zwischen dem Passivmodus, der nur die Suchfunktion erlaubt, und einem gewöhnlichen Gesprächsmodus umschaltbar bzw. ganz ausschaltbar. Für einen Benutzer oder einen Anrufer ist nicht unterscheidbar, ob das Mobiltelefon ausgeschaltet ist oder sich in dem Passivmodus, der die Suchfunktion zuläßt, befindet. Dadurch wird eine verdeckte Suche ermöglicht. Der Passivmodus erfordert nur beim Suchvorgang eine Interaktion mit dem Netzwerk, so daß der Stromverbrauch geringer ist als in regulär eingeschaltetem Zustand mir Roaming, und die Suchfunktion so über einen längeren Zeitraum aufrechterhalten bleiben kann.

Optional kann vorgesehen sein, daß sich das Mobiltelefon bei Empfang des Suchsignals in den regulären Betrieb einschaltet, so daß die gesuchte Person über Funk mit dem Suchenden kommunizieren kann.

Das Suchsignal wie auch das Antwortsignal können verschlüsselt sein, so daß Unbefugte diese Signale nicht oder nur schwer identifizieren können.

Das Antwortsignal kann verschlüsselte Information über die Umgebung des Mobiltelefons enthalten, die über Sensoren wie etwa ein an dem Mobiltelefon angebrachtes Mikrofon empfangen werden.

Um den Energieverbrauch im Suchmodus weiter zu senken, kann eine periodische Empfangsbereitschaft vorgesehen sein, so daß das Suchsignal beispielsweise jeweils in 10 Sekunden pro Minute empfangbar ist.

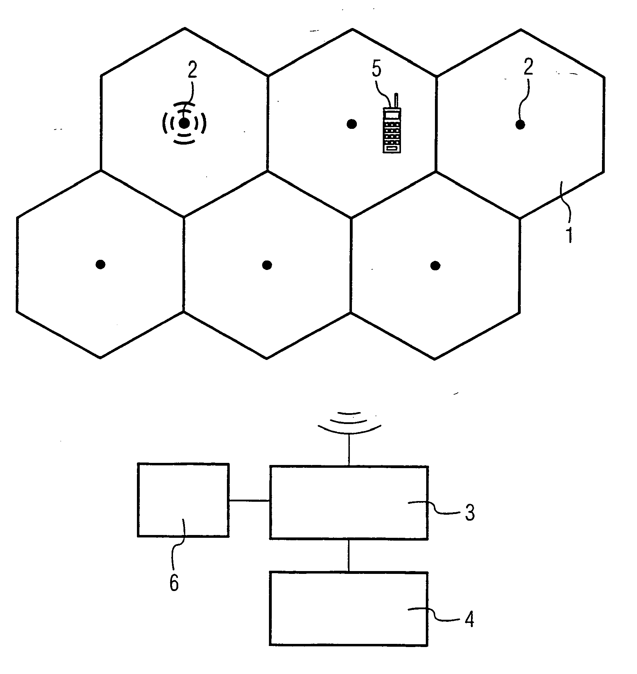

Die Erfindung wird im folgenden anhand eines bevorzugten Ausführungsbeispiels unter Bezugnahme auf die beiliegende einzige Figur 1 erläutert, die schematisch den Aufbau eines erfindungsgemäßen Kommunikationssystems zeigt.

Das zellulare Kommunikationssystem weist eine Vielzahl von Kommunikationszellen 1 auf, die jeweils über eine Basisstation 2 mit Sender/Empfängereinrichtung verfügen. Durch geeignete Zeit und/oder Frequenzmultiplextechniken können in einer einzigen Zelle gleichzeitig Gespräche mit mehreren Mobiltelefonen 5 geführt werden. Die Zellengröße liegt je nach Anwenderdichte bei einem Radius von einigen Kilometern bis zu wenigen hundert Metern oder darunter.

Das Mobilfunknetz weist ein Heimregister 3 auf, in dem die Mobiltelefone eines Netzbetreibers registriert werden, die Gesprächsannahme und -zuordnung gesteuert sowie die Abrechnung durchgeführt wird.

Ein erfindungsgemäßes Mobiltelefon weist neben den bekannten Betriebszuständen "ausgeschaltet", in dem das Mobiltelefon keinerlei Signale empfangen kann, und "eingeschaltet", wenn eine regelmäßige Interaktion mit dem Kommunikationsnetz und ein sogenanntes Roaming stattfindet, d. h. die momentane Position des Mobiltelefons dem Heimregister mitgeteilt wird, so daß eine ständige Anrufbarkeit sicher gestellt ist, einen weiteren Betriebszustand auf, der als Passivmodus bezeichnet wird. In diesem ist das Mobiltelefon nicht als gewöhnlicher Netzteilnehmer erkennbar und es findet kein Roaming statt. Das Mobiltelefon erkennt lediglich ein für dieses spezifisches Suchsignal und sendet als Antwort darauf ein kurzes, verschlüsseltes Antwortsignal aus. Weder für den Benutzer, der das Mobiltelefon in die Hand nimmt, noch für einen Anrufer ist erkennbar, ob sich das Mobiltelefon in dem Passivmodus befindet oder ausgeschaltet ist. Nur durch den speziellen Suchmodus ist das Mobiltelefon erreichbar. Der Passivmodus kann durch den Benutzer vorzugsweise nach Eingabe eines Identifikationscodes (PIN) aktiviert und wieder deaktiviert werden.

Da in dem Passivmodus keine ständige Interaktion zwischen Mobiltelefon und Kommunikationsnetz stattfindet, ist der Stromverbrauch des Mobiltelefons im Passivmodus geringer als im eingeschalteten oder Standby-Betriebsmodus. Um den Stromverbrauch weiter zu verringern und dadurch die Betriebsdauer im Passivmodus zu vergrößern, kann ein Intervallbetrieb vorgesehen sein, so daß das Mobiltelefon beispielsweise jeweils zehn Sekunden in einer Minute für das Suchsignal empfangsbereit ist.

Sobald ein Mobiltelefon in den Passivmodus geschaltet wird, wird dies in einem Speicher 4 des Heimregisters 3 zusammen mit dessen Kommunikationszelle abgespeichert. Anschließend ist keine Information mehr darüber vorhanden, in welcher Zelle sich das Mobiltelefon befindet.

Der Suchmodus kann nur von einer dafür autorisierten Person durchgeführt werden, die sich beispielsweise mittels eines Identifikationscodes ausweist. Die Personen können nahe Angehörige des Besitzers des zu suchenden Mobiltelefons, staatliche Behörden wie Polizei oder Staatsanwaltschaft oder auch der Arbeitgeber des Mobiltelefonbesitzers sein. Sobald der Suchvorgang initiiert ist, wird durch die mit dem Heimregister 3 verbundene Steuereinrichtung 6 eine Anzahl von Basisstationen 2 für die erste Suche ausgewählt. Dazu wird vorzugsweise die in dem Speicher 4 gespeicherte Information über den letzten "Aufenthaltsort" des Mobiltelefons vor dem Einschalten des Passivmodus herangezogen. Die ausgewählten Basisstationen 2 senden daraufhin ein für das gesuchte Mobiltelefon 5 spezifisches Suchsignal aus. Befindet sich das gesuchte Mobiltelefon innerhalb der Reichweite dieser Basisstationen, so sendet es das verschlüsselte Antwortsignal aus, das von einer oder mehreren der Basisstationen empfangen wird. Aus der Position der Basisstationen, die das Antwortsignal empfangen, kann relativ genau die Position des gesuchten Mobiltelefons ermittelt werden. Dabei können auch Intensität und Ankunftszeit des Antwortsignals als Parameter zur Positionsbestimmung mit herangezogen werden. Empfangen die Basisstationen kein Antwortsignal, so wird der Suchvorgang auf einen weiteren Bereich ausgedehnt und gegebenenfalls wiederholt.

Das von einem Mobiltelefon ausgegebene Antwortsignal ist in Dauer und Frequenz so verschlüsselt, daß es nur von einem System, das den Antwortschlüssel kennt, identifiziert werden kann. Von anderen Empfängern wird es nur als Rauschen erfaßt. Ein Mißbrauch der Suchfunktion kann so vermieden werden.

Das Mobiltelefon kann auch mit Sensoren wie etwa einem Mikrofon oder einem Temperaturfühler versehen sein. In dem Antwortsignal können dann verschlüsselt Informationen über die Umgebung des im Passivmodus befindlichen Mobiltelefons übermittelt werden, wie etwa ein Geräusch, Helligkeit/Dunkelheit oder die Temperatur, Feuchtigkeit oder dergleichen. Diese Funktionen könnten beispielsweise beim Auffinden von Entführungsopfern von Nutzen sein.

Eine weitere Variante der Erfindung liegt darin, ein Mobiltelefon nur für den Passivmodus bereitzustellen. Auf eine Tastatur oder ein Display, die für die sonstigen Mobiltelefonfunktionen erforderlich sind, kann dann verzichtet werden. Dadurch kann das Passiv-Mobiltelefon sehr klein und leicht gestaltet sein und es braucht nicht eine für Mobiltelefone übliche Form zu haben. Es kann in verborgener Form in anderen Gegenständen wie beispielsweise Schreibgerät, einer Uhr oder einem Taschenrechner enthalten sein.

Die Erfindung ermöglicht eine Suchfunktion für ein Mobiltelefon, die einfach in vorhandene und zukünftige Mobilfunksysteme integriert werden kann. Ein im Passivmodus befindliches Mobiltelefon kann dabei nicht von einem ausgeschalteten unterschieden werden. Aufgrund des geringen Energieverbrauchs im Passivmodus kann dieser über ein lange Zeitdauer aufrechterhalten werden.

## Patentansprüche

1. Zellulares Kommunikationssystem, mit mehreren Kommunikationszellen (1), umfassend:
- jeweils wenigstens eine Basisstation (2) zur schnurlosen Kommunikation mit einer Vielzahl von Mobilfunkteilnehmern (5), und
- ein Heimregister (3) zur Registrierung der Mobilfunkteilnehmer (5),
wobei wenigstens einer der Mobilfunkteilnehmer (5) derart ausgebildet ist, dass ein für diesen Mobilfunkteilnehmer (5) spezifisches Suchsignal erfasst und daraufhin ein Antwortsignal ausgesendet wird,
wobei weiter das Heimregister (3) einen Speicher (4) zur Speicherung von suchbaren Mobilfunkteilnehmern (5) aufweist,
wobei weiter die Basisstationen (2) dazu ausgebildet sind, um in einem Suchvorgang mobilfunkteilnehmer-spezifische Suchsignale für Mobilteilnehmer auszusenden,
und wobei das Heimregister (3) eine Steuereinrichtung (6) aufweist, die dazu ausgebildet ist, auf Veranlassung durch einen autorisierten Benutzer mindestens einen Suchvorgang einzuleiten und aufgrund von durch die Basisstationen (2) empfangenen Antwortsignalen von dem gesuchten Mobilfunkteilnehmer (5) dessen Position und/oder Status zu ermitteln,
wobei
wenigstens ein Mobilfunkteilnehmer als Mobiltelefon (5) ausgebildet ist, welches in einen Betriebszustand - Passivmodus - umschaltbar ist, welcher Passivmodus nur den Suchvorgang und sonst keine ständige Interaktion zwischen Mobiltelefon und Kommunikationssystem erlaubt,
wobei das Mobiltelefon (5) in dem Passivmodus derart ausgebildet ist, dass das Mobiltelefon (5) nicht als gewöhnlich im Gesprächsmodus funktionierende Mobilfunkteilnehmer erkennbar ist und ausschließlich auf das für diesen Mobilfunkteilnehmer spezifische Suchsignal durch Aussenden des Antwortsignals anspricht,
und wobei sobald ein Mobiltelefon (5) in den Passivmodus geschaltet wird, dies im Speicher (4) des Heimregisters (3) zusammen mit dessen Kommunikationszelle abgespeichert wird, und wobei sich das Mobiltelefon (5) bei Empfang des Suchsignals in den regulären Betrieb einschaltet.

2. Zellulares Kommunikationssystem nach Anspruch 1,
**dadurch gekennzeichnet,**
**dass** der Passivmodus eines Mobiltelefons (5) durch einen Benutzer mittels eines Benutzeridentifikationscodes einschaltbar und ausschaltbar ist.

3. Zellulares Kommunikationssystem nach einem der Ansprüche 1 oder 2,
**dadurch gekennzeichnet,**
**dass** das Suchsignal verschlüsselt ist.

4. Zellulares Kommunikationssystem nach einem der Ansprüche 1 bis 3,
**dadurch gekennzeichnet,**
**dass** das Suchsignal gepulst ist.

5. Zellulares Kommunikationssystem nach Anspruch 4,
**dadurch gekennzeichnet,**
**dass** ein Mobiltelefon (5) im Passivmodus einen periodischen Empfang des Suchsignals in Synchronisierung mit dessen Pulsfrequenz erlaubt.

6. Zellulares Kommunikationssystem nach einem der Ansprüche 1 bis 5,
**dadurch gekennzeichnet,**
**dass** das Antwortsignal verschlüsselt ist.

7. Zellulares Kommunikationssystem nach einem der Ansprüche 1 bis 6,
**dadurch gekennzeichnet,**
**dass** wenigstens ein Mobiltelefon (5) eine Speichereinrichtung zum Speichern von verschiedenen durch Sensoren erfassten oder von einem Benutzer einstellbaren Zuständen aufweist, wobei das von dem Mobiltelefon (5) ausgesendete Antwortsignal Information über die von dem Speicher gespeicherten Betriebszustände übermittelt.

8. Zellulares Kommunikationssystem nach einem der Ansprüche 1 bis 7,
**dadurch gekennzeichnet,**
**dass** kein Roaming für ein im Passivmodus befindliches Mobiltelefon (5) erfolgt.

9. Verfahren zur Positionsbestimmung eines Mobiltelefons (5) in einem zellularen Kommunikationssystem, welches Kommunikationssystem mehrere Kommunikationszellen (1) mit jeweils wenigstens einer Basisstation (2) zur schnurlosen Kommunikation mit einer Vielzahl von Mobiltelefonen (5), und ein Heimregister (3) zur Registrierung der Mobiltelefone (5) aufweist,
wobei das Mobiltelefon (5) in einen Passivmodus umschaltbar ist, welcher Passivmodus nur den Suchvorgang und sonst keine ständige Interaktion zwischen Mobiltelefon und Kommunikationssystem erlaubt, in dieses nicht als gewöhnlich im Gesprächsmodus funktionierende Mobilfunkteilnehmer erkennbar ist und ausschließlich ein für dieses Mobiltelefon (5) spezifisches Suchsignal erfasst und daraufhin ein Antwortsignal aussendet, und wobei das im Passivmodus befindliche Mobiltelefon (5) in dem zugehörigen Heimregister (3) des Kommunikationsnetzes zusammen mit dessen Kommunikationszelle gespeichert wird,
wobei zur Positionsbestimmung die folgenden Schritte aufgeführt werden:
- auf Veranlassung durch einen autorisierten Benutzer Aussendung des spezifischen Suchsignals durch ausgewählte Basisstationen (2),
- Empfang des Antwortsignals von dem gesuchten Mobiltelefon (5) durch eine oder mehrere Basisstationen (2),
- aufgrund der erfassten Antwortsignale Bestimmung eines Positionsbereichs in dem sich das gesuchte Mobiltelefon (5) befindet,
wobei sich das Mobiltelefon (5) bei Empfang des Suchsignals in den regulären Betrieb einschaltet.

10. Verfahren nach Anspruch 9,
**dadurch gekennzeichnet,**
**dass** die Basisstationen (2) zur Aussendung des Suchsignals in Abhängigkeit von der im Heimregister (3) gespeicherten Information gezielt ausgewählt werden.

11. Verfahren nach Anspruch 9 oder 10,
**dadurch gekennzeichnet,**
**dass** der Suchvorgang wiederholt ausgeführt wird.

12. Verfahren nach einem der Ansprüche 9 bis 11,
**dadurch gekennzeichnet**,
das Suchsignale und/oder Antwortsignale verschlüsselt werden.

13. Verfahren nach Anspruch 12,
**dadurch gekennzeichnet,**
**dass** die Verschlüsselungscodes nach einem Suchvorgang geändert werden.

14. Verfahren nach einem der Ansprüche 9 bis 13,
**dadurch gekennzeichnet,**
**dass** das Mobiltelefon (5) im Passivmodus periodisch für das Suchsignal empfangsbereit ist.

15. Verfahren nach Anspruch 14,
**dadurch gekennzeichnet,**
**dass** das Suchsignal gepulst ausgestrahlt wird.

16. Verfahren nach einem der Ansprüche 9 bis 15,
**dadurch gekennzeichnet,**
**dass** für den Passivmodus befindliche Mobiltelefone (5) kein Roaming erfolgt.

17. Verfahren nach einem der Ansprüche 9 bis 16,
**dadurch gekennzeichnet,**
**dass** ein zur Ausführung eines Suchvorgangs autorisierter Benutzer mittels eines Identifikatonscodes identifizierbar ist.

18. Verfahren nach einem der Ansprüche 9 bis 17,
**dadurch gekennzeichnet,**
**dass** zur Positionsbestimmung des gesuchten Mobiltelefons (5) die Signalstärke und/oder Empfangszeit eines in einer oder mehreren Zellen (1) empfangenen Antwortsignals von dem Mobiltelefon (5) verwendet wird.

19. Mobiltelefon (5) für ein zellulares Kommunikationssystem, wobei das Kommunikationssystem mehrere Kommunikationszellen (1) mit jeweils wenigstens einer Basisstation (2) zur schnurlosen Kommunikation mit einer Vielzahl von Mobiltelefonen (5) und ein Heimregister (3) zur Registrierung der Mobiltelefone (5) aufweist,
wobei das Mobiltelefon (5) in einen Passivmodus umschaltbar ist, welcher Passivmodus nur den Suchvorgang und sonst keine ständige Interaktion zwischen Mobiltelefon und Kommunikationssystem erlaubt, in dem das Mobiltelefon (5) nicht als gewöhnlich im Gesprächsmodus funktionierender Mobilfunkteilnehmer erkennbar ist und ausschließlich ein auf Veranlassung durch einen autorisierten Benutzer aus ausgewählten Basisstationen ausgesendetes, für dieses Mobiltelefon (5) spezifisches Suchsignal erfasst und als Antwort darauf ein Antwortsignal aussendet, welches die Bestimmung eines Positionsbereichs, in dem sich das gesuchte Mobiltelefon (5) befindet, ermöglicht
wobei das im Passivmodus befindliche Mobiltelefon (5) in dem zugehörigen Heimregister (3) zusammen mit dessen Kommunikationszelle gespeichert wird und ausgebildet ist, sich bei Empfang des Suchsignals in den regulären Betrieb einzuschalten.

20. Mobiltelefon nach Anspruch 19,
**dadurch gekennzeichnet,**
**dass** der Passivmodus mittels eines Benutzeridentifikationscodes ein- und ausschaltbar ist.

21. Mobiltelefon nach Anspruch 19 oder 20,
**dadurch gekennzeichnet,**
**dass** das ausgesandte Antwortsignal verschlüsselt ist.

22. Mobiltelefon nach einem der Ansprüche 19 bis 21,
**dadurch gekennzeichnet,**
**dass** das Mobiltelefon (5) einen oder mehrere Sensoren zur Erfassung von Geräuschen, Helligkeit, Temperatur oder andere von Sensoren erfassbare Messgrößen aufweist.

23. Mobiltelefon nach einem der Ansprüche 19 bis 22,
**dadurch gekennzeichnet,**
**dass** das Mobiltelefon (5) zur Verwendung nur im Passivmodus ausgebildet ist.

## Claims

1. Cellular communications system with a number of communications cells (1) comprising:
- at least one base station (2) each for cordless communication with a large number of mobile radio subscribers (5), and
- a home location register (3) for registration of the mobile radio subscribers (5),
- at least one of the mobile radio subscribers (5) being designed such that a specific search signal for this mobile radio subscriber is detected, and then a response signal is emitted,
the home location register (3) further having a memory (4) for storing searchable mobile radio subscribers (5),
the base stations (2) further being designed to send mobile-radio-subscriber-specific search signals in a search operation for mobile subscribers,
and the home location register (3) having a control device (6), which is designed to initiate at least one search operation at the instigation of an authorized user, and, as a result of response signals received by the base stations (2) from the sought mobile radio subscriber (5), to determine its position and/or status,
wherein
at least one mobile radio subscriber is in the form of a mobile telephone (5) which is switchable to an operating state - passive mode -, which passive mode allows only the search operation and otherwise no continual interaction between mobile telephone and communications system,
wherein the mobile telephone (5) in the passive mode is in the form such that the mobile telephone (5) is not recognizable as a mobile radio subscriber usually working in the call mode and responds only to the specific search signal for this mobile radio subscriber by sending the response signal,
and wherein as soon as a mobile telephone (5) is switched to the passive mode, this is stored in a memory (4) of the home location register (3) together with its communications cell,
and wherein the mobile telephone (5) switches to normal operation on reception of the search signal.

2. Cellular communications system according to Claim 1,
**characterized in that**
the passive mode of a mobile telephone (5) can be switched on and off by a user by means of a user identification code.

3. Cellular communications system according to one of Claims 1 and 2,
**characterized in that**
the search signal is encrypted.

4. Cellular communications system according to one of Claims 1 to 3,
**characterized in that**
the search signal is pulsed.

5. Cellular communications system according to Claim 4,
**characterized in that**
a mobile telephone (5) in the passive mode allows periodic reception of the search signal in synchronism with its pulse repetition frequency.

6. Cellular communications system according to one of Claims 1 to 5,
**characterized in that**
the response signal is encrypted.

7. Cellular communications system according to one of Claims 1 to 6,
**characterized in that**
at least one mobile telephone (5) has a memory facility for storing various statuses detected by sensors or capable of being set by a user, the response signal emitted by the mobile telephone (5) transmitting information about the operating statuses stored by the memory.

8. Cellular communications system according to one of Claims 1 to 7,
**characterized in that**
a mobile telephone (5) in the passive mode cannot roam.

9. Method for determining the position of a mobile telephone (5) in a cellular communications system, which communications system has a plurality of communication cells (1) with at least one base station (2) each for cordless communication with a large number of mobile telephones (5), and a home location register (3) for registration of the mobile telephones (5), the mobile telephone (5) being switchable to a passive mode, which passive mode allows only the search operation and otherwise no continual interaction between mobile telephone and communications system, in which it is not recognizable as a mobile radio subscriber usually working in the call mode and detects only a specific search signal for this mobile telephone (5), and then sends a response signal, and the mobile telephone (5) in the passive mode being stored in the associated home location register (3) of the communications network together with its communications cell,
the position determination involving the following steps being performed:
- emission of the specific search signal by selected base stations (2) at the instigation of an authorized user,
- reception of the response signal from the sought mobile telephone (5) by one or more base stations (2),
- as a result of the recorded response signals, determination of a position area where the sought mobile telephone (5) is located,
the mobile telephone (5) switches to normal operation on reception of the search signal.

10. Method according to Claim 9,
**characterized in that**
the base stations (2) for emitting the search signal are chosen selectively depending on the information stored in the home location register (3).

11. Method according to Claim 9 or 10,
**characterized in that**
the search operation is performed repeatedly.

12. Method according to one of Claims 9 to 11,
**characterized in that**
the search signals and/or response signals are encrypted.

13. Method according to Claim 12,
**characterized in that** the encryption codes are changed after a search operation.

14. Method according to one of Claims 9 to 13,
**characterized in that**
the mobile telephone (5) in the passive mode is periodically ready to receive the search signal.

15. Method according to Claim 14,
**characterized in that**
the search signal is transmitted in pulsed form.

16. Method according to one of Claims 9 to 15,
**characterized in that**
mobile telephones (5) in the passive mode cannot roam.

17. Method according to one of Claims 9 to 16,
**characterized in that**
a user authorized to execute a search operation is identifiable by means of an identification code.

18. Method according to one of Claims 9 to 17,
**characterized in that**
the signal strength and/or time of reception of a response signal received from the mobile telephone (5) in one or more cells (1) is used for determining the position of the sought mobile telephone (5).

19. Mobile telephone (5) for a cellular communications system, the communications system having a plurality of communications cells (1) with at least one base station (2) each for cordless communication with a large number of mobile telephones (5), and a home location register (3) for registration of the mobile telephones (5), the mobile telephone (5) being switchable to a passive mode, which passive mode allows only the search operation and otherwise no continual interaction between mobile telephone and communications system, in which the mobile telephone (5) is not recognizable as a mobile radio subscriber usually working in the call mode and detects only a specific search signal, emitted from selected base stations at the instigation of an authorized user, for this mobile telephone (5), and then sends a response signal in reply which allows the determination of a position area where the sought mobile telephone (5) is located, the mobile telephone (5) in the passive mode being stored in the associated home location register (3) together with its communications cell and being designed to switch to normal operation on reception of the search signal.

20. Mobile telephone according to Claim 19,
**characterized in that** the passive mode can be switched on and off by means of a user identification code.

21. Mobile telephone according to Claim 19 or 20,
**characterized in that**
the emitted response signal is encrypted.

22. Mobile telephone according to one of Claims 19 to 21,
**characterized in that**
the mobile telephone (5) has one or more sensors for detecting noises, brightness, temperature or other measured variables which can be recorded by sensors.

23. Mobile telephone according to one of Claims 19 to 22,
**characterized in that**
the mobile telephone (5) is designed for use only in passive mode.

## Revendications

1. Réseau de communication cellulaire avec plusieurs cellules de communication (1), comprenant
- respectivement au moins une station de base (2) aux fins de la communication sans fil avec une pluralité d'usagers radio mobiles (5) et
- un registre de localisation nominal (3) pour enregistrer les usagers radio mobiles (5),
au moins l'un des usagers radio mobiles (5) étant réalisé de manière telle qu'un signal de recherche spécifique pour cet usager radio mobile (5) est détecté et, ensuite, un signal de réponse est émis,
en outre, le registre de localisation nominale (3) comportant une mémoire (4) pour mettre en mémoire des usagers radio mobiles (5) qui peuvent être recherchés,
en outre, les stations de base (2) étant réalisées pour émettre, dans une opération de recherche, des signaux de recherche spécifiques à des usagers radio mobiles pour des usagers radio mobiles, et
le registre de localisation nominal (3) comportant un dispositif de commande (6) qui est réalisé pour initialiser au moins une opération de recherche sur ordre d'un utilisateur autorisé et, sur la base de signaux de réponse de l'usager radio mobile recherché (5) reçus par les stations de base (2), déterminer la localisation et/ou le statut de celui-ci,
au moins un usager radio mobile se présentant sous la forme d'un téléphone mobile (5) qui peut être commuté sur un état de fonctionnement - mode passif - lequel mode passif permet uniquement l'opération de recherche et autrement aucune interaction permanente entre le téléphone mobile et le système de communication,
le téléphone mobile (5), dans le mode passif, étant réalisé de manière telle que le téléphone mobile (5) ne peut pas être reconnu en tant qu'usager radio mobile fonctionnant habituellement en mode de communication et réagit exclusivement au signal de recherche spécifique pour cet usager radio mobile par émission du signal de réponse et
dès qu'un téléphone mobile (5) est commuté sur le mode passif, ceci étant mis en mémoire dans la mémoire (4) avec sa cellule de communication du registre de localisation nominal (3) de celui-ci et
le téléphone mobile (5) se mettant en mode régulier à la réception du signal de recherche.

2. Système de communication cellulaire selon la revendication 1, **caractérisé en ce que** le mode passif d'un téléphone mobile (5) peut être mis en marche et mis hors marche par un utilisateur au moyen d'un code d'identification d'utilisateur.

3. Système de communication cellulaire selon l'une des revendications 1 ou 2, **caractérisé en ce que** le signal de recherche est crypté.

4. Système de communication cellulaire selon l'une des revendications 1 à 3, **caractérisé en ce que** le signal de recherche est pulsé.

5. Système de communication cellulaire selon la revendication 4, **caractérisé en ce qu'**un téléphone mobile (5), en mode passif, permet une réception périodique du signal de recherche en synchronisation avec la fréquence d'impulsion de celui-ci.

6. Système de communication cellulaire selon l'une des revendications 1 à 5, **caractérisé en ce que** le signal de réponse est crypté.

7. Système de communication cellulaire selon l'une des revendications 1 à 6, **caractérisé en ce qu'**au moins un téléphone mobile (5) comporte un dispositif de mémoire pour mettre en mémoire différents états détectés par des capteurs ou réglables par un utilisateur, le signal de réponse émis par le téléphone mobile (5) transmettant une information sur les états de fonctionnement mis en mémoire par la mémoire.

8. Système de communication cellulaire selon l'une des revendications 1 à 7, **caractérisé en ce qu'**il ne se produit pas d'itinérance pour un téléphone mobile (5) qui se trouve en mode passif.

9. Procédé pour déterminer la localisation d'un téléphone mobile (5) dans un système de communication cellulaire qui comporte plusieurs cellules de communication (1) avec respectivement au moins une station de base (2) aux fins de la communication sans fil avec une pluralité de téléphones mobiles (5) et un enregistreur de localisation nominal (3) pour enregistrer les téléphones mobiles (5),
le téléphone mobile (5) pouvant être commuté dans un mode passif, lequel mode passif permet uniquement l'opération de recherche et autrement aucune interaction permanente entre le téléphone mobile et le système de communication, celui-ci ne pouvant pas être reconnu en tant qu'usager radio mobile fonctionnant habituellement en mode de communication et détectant exclusivement un signal de recherche spécifique pour ce téléphone mobile (5) et émettant ensuite un signal de réponse et le téléphone mobile (5) qui se trouve en mode passif étant mis en mémoire avec sa cellule de communication dans le registre de localisation nominal associé (3) du réseau de communication de celui-ci,
les étapes suivantes étant effectuées aux fins de la détermination de la localisation:
- sur ordre d'un utilisateur autorisé, émission du signal de recherche spécifique par des stations de base sélectionnées (2),
- réception du signal de réponse du téléphone mobile recherché (5) par une ou plusieurs stations de base (2),
- détermination, sur la base des signaux de réponse détectés, d'une zone de localisation dans laquelle se trouve le téléphone mobile recherché (5),
le téléphone mobile (5) se mettant en mode régulier à la réception du signal de recherche.

10. Procédé selon la revendication 9, **caractérisé en ce que** les stations de base (2) sont sélectionnées de manière ciblée pour émettre le signal de recherche en fonction de l'information stockée dans le registre de localisation nominal (3).

11. Procédé selon la revendication 9 ou 10, **caractérisé en ce que** l'opération de recherche est réalisée de manière répétée.

12. Procédé selon l'une des revendications 9 à 11, **caractérisé en ce que** des signaux de recherche et/ou des signaux de réponse sont cryptés.

13. Procédé selon la revendication 12, **caractérisé en ce que** les codes de cryptage sont modifiés après une opération de recherche.

14. Procédé selon l'une des revendications 9 à 13, **caractérisé en ce que** le téléphone mobile (5), en mode passif, est périodiquement prêt à recevoir le signal de recherche.

15. Procédé selon la revendication 14, **caractérisé en ce que** le signal de recherche est émis de manière pulsée.

16. Procédé selon l'une des revendications 9 à 15, **caractérisé en ce qu'**il ne se produit pas d'itinérance pour des téléphones mobiles (5) qui se trouvent en mode passif.

17. Procédé selon l'une des revendications 9 à 16, **caractérisé en ce qu'**un utilisateur autorisé à exécuter une opération de recherche est identifiable au moyen d'un code d'identification.

18. Procédé selon l'une des revendications 9 à 17, **caractérisé en ce que**, aux fins de la détermination de la localisation du téléphone mobile recherché (5), l'intensité de signal et/ou l'heure de réception d'un signal de réponse reçu dans une ou plusieurs cellules (1) sont utilisés par le téléphone mobile (5).

19. Téléphone mobile (5) pour un système de communication cellulaire, le système de communication comportant plusieurs cellules de communication (1) avec respectivement au moins une station de base (2) aux fins de la communication sans fil avec une pluralité de téléphones mobiles (5) et un enregistreur de localisation nominal (3) pour enregistrer les téléphones mobiles (5),
le téléphone mobile (5) pouvant être commuté dans un mode passif qui permet uniquement l'opération de recherche et autrement aucune interaction permanente entre le téléphone mobile et le système de communication, dans lequel le téléphone mobile (5) ne peut pas être reconnu en tant qu'usager radio mobile fonctionnant habituellement en mode de communication et détecte exclusivement un signal de recherche spécifique pour ce téléphone mobile (5) et émis sur ordre d'un utilisateur autorisé à partir de stations de base sélectionnées et émet ensuite en réponse un signal de réponse qui permet la détermination d'une zone de localisation dans laquelle le téléphone mobile (5) recherché se trouve, le téléphone mobile (5) qui se trouve en mode passif étant mis en mémoire avec sa cellule de communication dans le registre de localisation nominal (3) associé de celui-ci et étant réalisé pour se mettre en mode régulier à la réception du signal de recherche.

20. Téléphone mobile selon la revendication 19, **caractérisé en ce que** le mode passif peut être mis en marche et coupé au moyen d'un code d'identification d'utilisateur.

21. Téléphone mobile selon la revendication 19 ou 20, **caractérisé en ce que** le signal de réponse émis est crypté.

22. Téléphone mobile selon l'une des revendications 19 à 21, **caractérisé en ce que** le téléphone mobile (5) comporte un ou plusieurs capteurs pour détecter des bruits, la luminosité, la température ou d'autres grandeurs de mesure détectables par des capteurs.

23. Téléphone mobile selon l'une des revendications 19 à 22, **caractérisé en ce que** le téléphone mobile (5) est réalisé pour être utilisé uniquement en mode passif.
